# FASCICULE DE BREVET EUROPEEN

(11) **EP 2 203 712 B1**
(45) Date de publication et mention de la délivrance du brevet: **20.03.2013**
(21) Numéro de dépôt: 08842791.9
(22) Date de dépôt: 20.10.2008
(51) Int. Cl.: G06T 7/00

(54) **PROCEDE ET DISPOSITIF DE MESURE DE JEU ET D'AFFLEUREMEMT ENTRE DES PIECES FIXEES SUR UN ENSEMBLE EN L'ABSENCE DE L'UNE D'ELLES**
VERFAHREN UND VORRICHTUNG ZUR MESSUNG VON SPIELRÄUMEN UND BÜNDIGEN ABSCHLÜSSEN ZWISCHEN AN EINER ANORDNUNG BEFESTIGTEN KOMPONENTEN OHNE VORHANDENSEIN DIESER KOMPONENTEN
METHOD AND DEVICE FOR MEASURING CLEARANCES AND FLUSH-FITTING BETWEEN COMPONENTS FIXED TO AN ASSEMBLY IN THE ABSENCE OF ONE OF THESE COMPONENTS

(30) Priorité: 23.10.2007 FR 0758525
(43) Date de publication de la demande: 07.07.2010
(73) Titulaire: Peugeot Citroën Automobiles SA, 78140 Vélizy-Villacoublay (FR)
(72) Inventeur: CALVE, Gilbert, F-35000 Rennes (FR); FOUBERT, Christophe, 78340 Les Clayes sous Bois (FR)
(74) Mandataire: Allain, Laurent
(86) Numéro de dépôt international: PCT/FR2008/051884
(87) Numéro de publication internationale: WO 2009/053660

(56) Documents cités:
- EP-A- 0 845 656
- JP-A- 5 295 999
- JP-A- 7 286 820
- US-A- 4 654 949
- US-A- 4 666 303
- US-A- 5 129 010
- US-B2- 7 024 032

## Description

La présente invention concerne d'une façon générale un procédé et un dispositif de mesure de jeu et d'affleurement entre des pièces fixées sur un ensemble et cela en l'absence de cette pièce.

Plus particulièrement mais pas exclusivement, la présente invention concerne un procédé de mesure respective de jeu et d'affleurement entre des pièces destinées à être fixées sur un véhicule automobile et cela en l'absence de l'une d'elle lors de la prise de mesure, en particulier pour les portes, les ailes, le capot, les vitres ou le toit du véhicule automobile.

Dans ce domaine comme dans beaucoup d'autres, la conformité du jeu et de l'affleurement est un objectif important car ces caractéristiques garantissent le fonctionnement mécanique de l'ensemble, l'étanchéité et l'esthétisme de l'ensemble contribuant ainsi fortement à l'appréciation de la qualité de fabrication du produit fini.

Ces mesures peuvent être faites aisément quand les pièces à mesurer sont déjà en position l'une par rapport à l'autre, par exemple par mesure par contact avec jauges d'écartement ou cales étalon ce qui a cependant comme inconvénient de présenter un risque d'endommagement des pièces soumises à la mesure, notamment par rayure de celles-ci.

Cependant, il y a de nombreux cas où une des pièces est manquante lors de la mesure du jeu et de l'affleurement entre les deux pièces. C'est le cas, par exemple mais non uniquement, pour une vitre fenestron avant qui sera collée sur l'avant d'une porte avant de véhicule au montage tandis que les mesures de jeu et d'affleurement entre ce fenestron et la partie avant de la porte avant correspondante seront faites préalablement à ce montage.

Il a été proposé de placer un faux fenestron afin de pouvoir mesurer le jeu et l'affleurement entre la porte avant et ce faux fenestron lors de l'étape préalable de mesure. Cette solution présente cependant de nombreux inconvénients à savoir la nécessité d'investir dans deux jeux gauche et droit de faux fenestrons, la nécessité d'effectuer leur positionnement sur chaque véhicule en amont de la station de mesure de jeu et d'affleurement, la nécessité de procéder à leur enlèvement en aval de cette station avec les risques d'oubli et/ou de casse que cela comporte et, enfin, la nécessité de ramener les faux fenestrons du pas de dépose au pas de mise en place. Cela entraîne donc de nombreuses manipulations à effectuer sur les faux fenestrons en plus de leur coût de fabrication.

Avec cette solution, la mesure de jeu et d'affleurement proprement dite peut s'effectuer sur l'analyse d'images acquises à l'aide de capteurs deux dimensions dits 2D, ce qui présente de nombreux avantages comparé à une mesure mécanique, notamment en ce qui concerne le risque d'endommagement des pièces. Dans cette mesure optique, chaque capteur émet une raie de lumière laser projetée radialement à l'accostage à mesurer. Dans une image obtenue par ce procédé, les écarts horizontaux visibles entre les segments de droites sont représentatifs du jeu et les écarts verticaux visibles entre les segments de droite sont représentatifs de l'affleurement. Avec un algorithme de traitement d'images, il est possible de quantifier les écarts verticaux et horizontaux entre les segments pour en déduire le jeu et l'affleurement.

Le document US6454949 décrit un dispositif et une méthode de mesure de jeu entre deux pièces, et non pas de l'affleurement, la deuxième pièce étant présente, mais pas sur l'ensemble, de sorte que la deuxième pièce peut être considérée comme n'étant pas sur l'ensemble.

Les documents FR-A-2 756 626 et US-A-5 129 010 concernent des capteurs optiques 3D utilisés afin de déterminer les jeux et affleurements entre des pièces et pouvant servir pour le procédé précédemment indiqué. Cependant, il n'est pas précisé dans ces documents la possibilité d'une mesure entre le bord d'une pièce et un élément d'ancrage de l'autre pièce, en l'absence de celle-ci sur son ensemble support.

Dans le document US-7 024 032, on propose une représentation en 3D d'une pièce afin d'évaluer la qualité de cette pièce par rapport à un environnement dans lequel elle doit être implantée. A cet effet, on collecte des données de mesure de la pièce, puis avec les données théoriques de l'environnement d'assemblage de cette pièce, on valide la pièce par rapport à son environnement.

La présente invention a pour but de pouvoir permettre une mesure de jeu et d'affleurement précise et rapide entre deux pièces destinées à être montées sur un ensemble, une de ces deux pièces étant manquante lors de la prise de mesure.

L'invention concerne un procédé de mesure de jeu et d'affleurement entre les bords destinés à être en vis-à-vis d'une première et d'une seconde pièce fixées à un ensemble, la seconde pièce étant à positionner sur cet ensemble par rapport à au moins un point d'indexage, fixe et repérable sur cet ensemble, cette seconde pièce étant absente de l'ensemble lors de la prise de mesure, caractérisé par les étapes suivantes :
- positionnement d'au moins un capteur dans une position lui permettant d'avoir une zone de mesure comprenant le bord de la première pièce et le point d'indexage sur l'ensemble support pour la seconde pièce manquante,
- émission d'une raie LASER pour la formation d'une première image de la zone de mesure, la raie LASER formant un plan lumineux projeté sur la première pièce et l'ensemble de manière à créer au moins une ligne s'étendant transversalement aux bords destinés à être en vis à vis des deux pièces,
- acquisition par ce capteur d'une première image,
- émission d'un éclairage additionnel pour la formation d'une seconde image de cette zone de mesure dans laquelle le point d'indexage sur l'ensemble apparaîtra en ombre chinoise,
- acquisition par ce capteur d'une seconde image,
- traitement des données des images acquises et détermination par un algorithme de la mesure de jeu et d'affleurement entre les première et seconde pièces. Ces deux étapes s'effectuant par :
- détermination de la position du bord de la première pièce ainsi que du point d'indexage à partir des images acquises donnant ainsi respectivement une mesure de profondeur pour la première image et une mesure de distance pour la seconde image,
- correction par cet algorithme de la mesure de profondeur par soustraction de la valeur de la cote théorique d'épaisseur de la seconde pièce afin d'obtenir l'affleurement, et
- correction par cet algorithme de la mesure de distance par soustraction de la valeur de la cote théorique entre le point d'indexage et le bord de la seconde pièce pour obtenir le jeu.

Selon d'autres caractéristiques additionnelles du procédé :
- la seconde image est obtenue par projection d'un faisceau de lumière diffus,
- dans le cas où la seconde pièce présente plusieurs points d'indexage sur l'ensemble support, le procédé comprend des étapes similaires de mesure respective de distance et de profondeur pour chaque point d'indexage afin d'obtenir respectivement une mesure de jeu ou d'affleurement, un capteur spécifique étant associé à chaque point d'indexage,
- une étape d'inter comparaison de mesure de jeu et d'affleurement obtenue avec celle d'un autre procédé de mesure étalonné est effectuée par offset calculé pour la possible correction de ces mesures et un éventuel réétalonnage de l'algorithme utilisé,
- les mesures ont lieu soit lors d'un défilement de l'ensemble support devant le ou les capteurs, soit quand l'ensemble support est fixe devant le ou les capteurs pour la prise de mesure.

L'invention concerne également un dispositif de mesure de jeu et d'affleurement entre les bords destinés à être en vis-à-vis d'une première et d'une seconde pièce fixées à un ensemble, la seconde pièce étant à positionner sur cet ensemble par rapport à au moins un point d'indexage, fixe et repérable sur cet ensemble, cette seconde pièce n'étant pas sur l'ensemble lors de la prise de mesure, caractérisé en ce qu'il comprend au moins un capteur 3D présentant une zone de mesure respective compatible entre le bord devant être en vis-à-vis de la première pièce et le point d'indexage de la seconde sur la partie support de l'ensemble, une première et une seconde source de lumière avec des moyens optiques associés pour émettre respectivement une raie LASER pour l'obtention de la première image et un éclairage diffus pour l'obtention de la seconde image avec le point d'indexage apparaissant en ombre chinoise sur cette seconde image, ce dispositif comprenant, en outre, une unité de traitement des images acquises pour le calcul de la mesure respective de profondeur et de distance, une unité de stockage de données relatives aux deux pièces pour le calcul de la mesure respective de jeu et d'affleurement après correction selon les données enregistrées dans l'unité de stockage.

Selon d'autres caractéristiques additionnelles du dispositif :
- la première source est une diode LASER et la seconde source un panneau LED,
- au moins un capteur 3D est intégré avec la première source de lumière formant ainsi un capteur vision, ce capteur étant, de préférence, sous forme d'une caméra,
- le ou les capteurs 3D sont disposés latéralement à l'ensemble et n'interfèrent pas avec celui-ci quand cet ensemble est en défilement lors des prises de mesures.

L'invention concerne aussi un ensemble contenant au moins des première et seconde pièces, caractérisé en ce que les mesures de jeu et d'affleurement de ces deux pièces l'une par rapport à l'autre sont effectuées soit par un tel procédé, soit par un tel dispositif.

Avantageusement l'ensemble comprend d'autres éléments destinés à être en vis-à-vis et en l'absence d'un de ces éléments, dont la mesure respective de jeu et d'affleurement est effectuée de manière similaire et simultanément aux première et seconde pièces.

Cet ensemble peut être un véhicule automobile.

Dans ce véhicule automobile, la première pièce peut être une porte du véhicule et la seconde pièce un fenestron associé à cette porte et posé sur le véhicule en aval de la prise des mesures de jeu et d'affleurement sur la chaîne de montage.

L'effet technique obtenu par la présente invention est de pouvoir procéder, à la place d'une mesure d'affleurement et de jeu en prenant comme référence les bords en vis-à-vis des pièces, à une mesure respective de profondeur pour déterminer l'affleurement et de distance entre le bord d'une des pièces et la position d'un point d'ancrage ou de repérage fixe pour l'autre pièce sur l'ensemble, cette mesure de distance permettant d'établir après correction le jeu entre les deux pièces.

Une mesure entre bord d'une pièce et point d'ancrage ou de repérage de l'autre sur l'ensemble est substituée à une mesure bord à bord de l'écartement des pièces, la mesure du jeu recherché s'obtenant en retranchant à la distance mesurée la cote théorique bord de la première pièce et point d'ancrage de la seconde de même que la mesure de l'affleurement en retranchant à la profondeur mesurée la cote théorique d'épaisseur de la seconde pièce.

L'invention va maintenant être décrite plus en détail mais de façon non limitative en regard des figures annexées, dans lesquelles :
- la figure 1 est une représentation schématique d'une vue de côté de la carrosserie d'un véhicule automobile montrant des exemples possibles de mesures de jeu et d'affleurement,
- la figure 2 est une représentation schématique d'une vue en perspective d'un fenestron positionné sur la carrosserie d'un véhicule automobile,
- la figure 3 est une représentation schématique du dispositif de mesures de jeu et d'affleurement selon l'invention,
- la figure 4 est une courbe relative à l'acquisition de la première image représentant l'écart horizontal visible représentatif de l'affleurement,
- la figure 5 est une représentation schématique de la deuxième image obtenue par le procédé conformément à la présente invention permettant la mesure de distance entre le bord extérieur de la porte avant et le trou d'indexage du fenestron, celui-ci étant absent lors de la mesure.

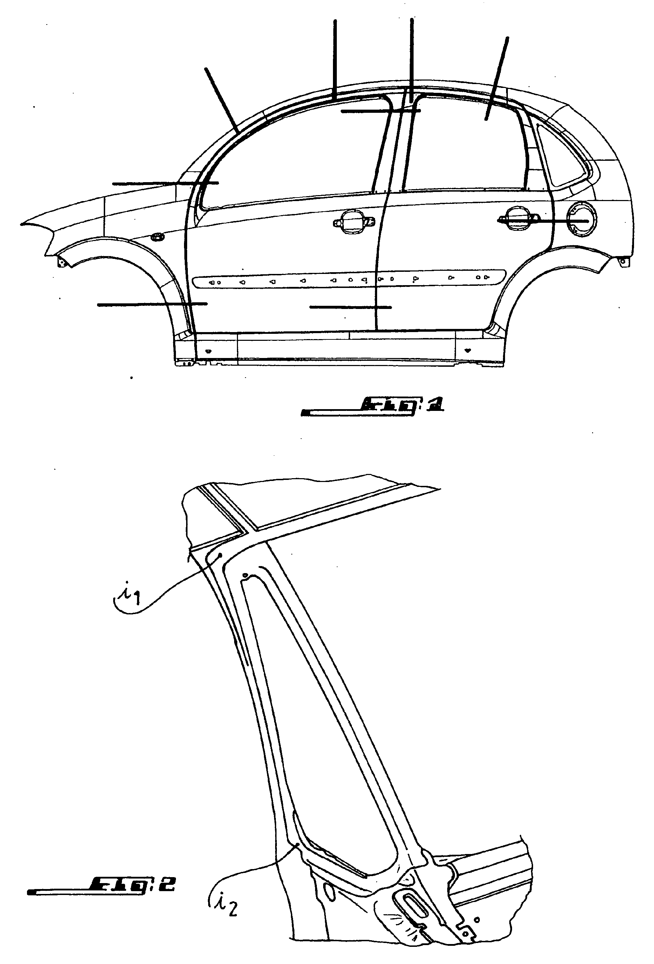

La figure 1 montre les différentes mesures de jeu et d'affleurement entre divers éléments du véhicule automobile que peut subir une carrosserie d'un véhicule automobile. Sans être limitatif, ces mesures peuvent aussi bien concerner les jonctions entre aile et porte, à l'avant et à l'arrière du véhicule, portes entre elles, en haut et en bas de celles-ci, vitre et porte, vitre et toit, toit et porte de même que capot avec ces éléments. Plus d'une trentaine de mesures de jeu et d'affleurement peuvent être effectuées à une station spécifique dite station de mesure.

Dans ce qui va suivre, l'exemple de mesure de jeu et d'affleurement va concerner la jonction d'un fenestron avant à une porte avant du véhicule mais cet exemple n'est pas limitatif et le procédé ainsi que le dispositif conformes à la présente invention peuvent s'appliquer pour d'autres éléments du véhicule, par exemple les vitres par rapport à un autre élément de véhicule lorsque ces vitres ne sont pas encore en place lors de la prise de mesure. De plus, la présente invention n'est pas limitée aux éléments d'un véhicule automobile et peut aussi s'appliquer pour une mesure d'espacement entre pièces supportées par un ensemble quelconque ou pièce fixée sur une autre pièce, cette dernière jouant aussi le rôle d'ensemble support.

La figure 2 montre la problématique spécifique du fenestron avant destiné à être monté bord à bord à l'avant de la porte avant d'un véhicule automobile. Comme précédemment décrit dans la partie introductive de la présente invention, ce fenestron est monté par collage au poste de montage tandis que le poste de mesure se trouve en amont de ce poste de montage.

Le fenestron présente deux points d'indexage i1 et i2 visibles sur la partie support de ce fenestron quand celui-ci n'est pas encore monté en position et qui peuvent servir de points de repère pour établir les mesures de jeu et d'affleurement faites en l'absence de ce fenestron.

Dans le cas du fenestron et de la porte avant du véhicule, le procédé de mesure de jeu et d'affleurement entre les bords destinés à être en vis-à-vis d'une première et d'une seconde pièce, c'est-à-dire la porte avant et le fenestron, fixées sur un véhicule, le fenestron au moins étant retenu sur le véhicule par deux points d'indexage permettant le repérage de la position du fenestron sur le véhicule, le fenestron n'étant pas en position lors de la prise de mesure, présente les étapes suivantes :
- positionnement de deux capteurs pour chaque point d'indexage dans une position permettant à chaque capteur d'avoir une zone de mesure comprenant le bord de la porte avant et le point d'indexage associé du fenestron alors manquant,
- émission simultanée d'une raie LASER pour chaque point d'indexage afin de former une première image de la zone de mesure,
- acquisition d'une première image par chacun des capteurs,
- émission simultanée d'un éclairage additionnel pour chaque point d'indexage afin de former une seconde image de cette zone de mesure dans laquelle le point d'indexage associé du fenestron apparaîtra en ombre chinoise,
- acquisition d'une seconde image par chacun des capteurs pour une mesure de profondeur entre bord en vis-à-vis de la porte avant et de la partie destinée à supporter plus tard le fenestron ainsi qu'une mesure de distance entre bord en vis-à-vis de la porte avant et du point d'indexage associé sur la partie de la carrosserie support du fenestron,
- traitement et détermination par un algorithme de la position du bord de la porte avant ainsi que du point d'indexage à partir des images acquises donnant ainsi respectivement une mesure de profondeur pour la première image et une mesure de distance pour la seconde image,
- correction par cet algorithme de la mesure de profondeur par soustraction de la valeur de la cote théorique d'épaisseur du fenestron afin d'obtenir l'affleurement,
- correction par cet algorithme de la mesure de distance par soustraction de la valeur de la cote théorique entre le point d'indexage sur la partie support du fenestron et le bord du fenestron pour obtenir le jeu.

Préférentiellement, la première image est obtenue par émission d'une raie laser formant un plan lumineux projeté sur la porte avant du véhicule de manière à créer au moins une ligne s'étendant transversalement aux bords destinés à être en vis à vis de cette porte avant et du fenestron.

Préférentiellement, la seconde image est obtenue par projection d'un faisceau de lumière diffus.

Comme le fenestron présente deux points d'indexage il et i2, des étapes similaires de mesure de distance et de profondeur pour chaque point d'ancrage sont entreprises afin d'obtenir des mesures de jeu ou d'affleurement, un capteur spécifique étant associé pour chaque point d'indexage. Avantageusement, il y a donc deux capteurs pour chaque côté latéral du véhicule avec respectivement un fenestron droit et gauche. Ces étapes peuvent être synchronisées mais ce n'est pas une obligation.

Avantageusement une étape d'inter comparaison de la mesure de jeu et d'affleurement obtenue avec celle d'un autre procédé de mesure étalonné est effectuée par offset calculé pour la possible correction de ces mesures et un réétalonnage de l'algorithme utilisé. On pourra citer, par exemple, comme autre procédé de mesure de jeu et d'affleurement un procédé avec un capteur portable porté par l'opérateur et utilisant aussi une technologie de triangulation LASER, le dispositif pour la mise en oeuvre du procédé pouvant facilement être réétalonné. Cette mesure d'inter comparaison est, par exemple, obtenue en comparant la moyenne de trois mesures selon un des procédés avec la moyenne obtenue selon l'autre procédé pour le réétalonnage du dispositif de mesure de jeu et d'affleurement.

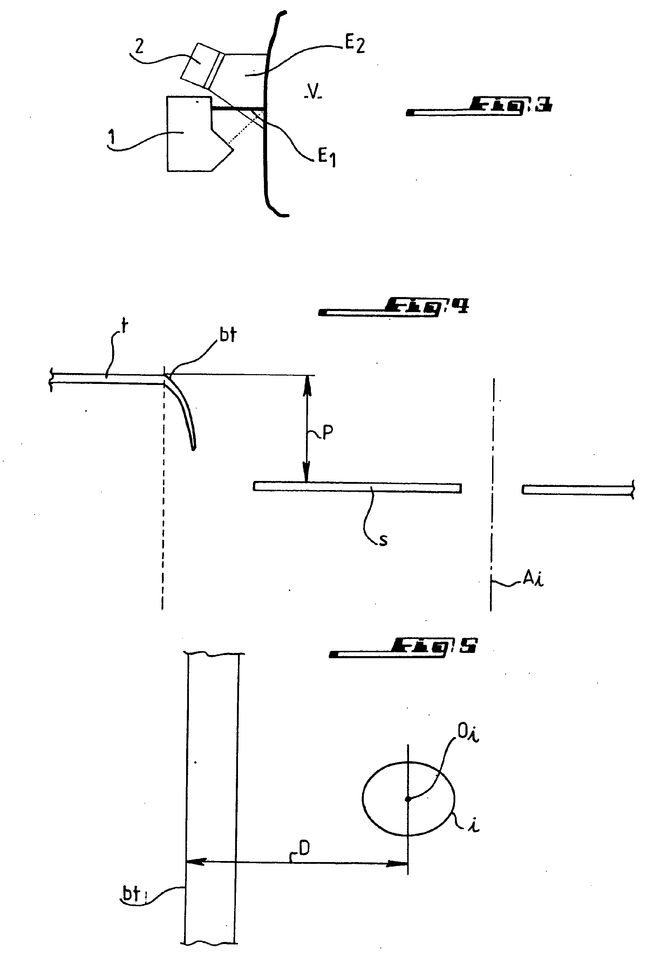

La figure 3 est une représentation schématique du dispositif de mesure de jeu et d'affleurement selon l'invention.

Préférentiellement, la mesure respective de jeu et d'affleurement ont lieu lors du défilement du véhicule V devant le ou les capteurs. Les côtés droit et gauche du véhicule peuvent être soumis simultanément à des mesures de jeu et d'affleurement.

Ainsi, selon la présente invention, le dispositif de mesure de jeu et d'affleurement entre les bords destinés à être en vis-à-vis de la porte avant et du fenestron présente au moins un capteur 3D, référencé 1, dans le cas du fenestron, préférentiellement deux capteurs positionnés respectivement par rapport au premier point d'indexage il et au second point d'indexage i2, visibles à la figure 2, en présentant une zone de mesure respective compatible entre le bord de la porte avant et le point d'indexage il ou i2 associé sur la partie de la carrosserie support du fenestron. Ce dispositif présente aussi une première 1 et une seconde 2 source de lumière avec des moyens optiques associés pour émettre respectivement une raie LASER E1 pour l'obtention de la première image et un éclairage diffus E2 pour l'obtention de la seconde image avec le point d'indexage apparaissant en ombre chinoise sur cette seconde image. Enfin, ce dispositif comprend une unité de stockage de données relatives à la porte avant et au fenestron et une unité de traitement des images acquises pour le calcul de mesure respective de profondeur et de distance suivi par le calcul de mesure de jeu et d'affleurement selon les données enregistrées dans l'unité de stockage, ces deux unités n'étant pas montrées aux figures.

Avantageusement, la première source 1 est une diode LASER et la seconde source 2 un panneau LED.

Comme montré à la figure 3, au moins un des deux capteurs 3D peut être associé avec la diode LASER formant ainsi un capteur vision 1. Avantageusement, ce capteur peut être aussi sous la forme d'une caméra.

Pendant la mise en oeuvre du procédé par le dispositif ci-dessus décrit, le véhicule V passe, avantageusement sans que cela soit limitatif, en défilement devant les capteurs 1 en étant sur la ligne de montage. D'autres mesures de jeu et d'affleurement sur d'autres éléments du véhicule, comme toit, vitres, capot, portes, ailes, coffres et cela des deux côtés du véhicule, peuvent être réalisées simultanément et en synchronisation pour ne pas rallonger le temps de prise de mesure. Le dispositif peut aussi fonctionner quand l'ensemble support est fixe devant les capteurs.

En ce qui concerne la mesure du jeu et d'affleurement porte avant fenestron avec deux points d'indexage, sur chaque côté latéral du véhicule, avantageusement, deux capteurs 3D sont disposés latéralement au véhicule sur sa ligne de montage et n'interfèrent pas avec lui quand il est en défilement lors de la prise de mesure.

De manière générale, quand la zone de mesure est étendue, afin de ne pas dégrader la qualité de l'acquisition des images, il convient d'adopter un capteur de plus haute définition, par exemple sous la forme d'une caméra.

La figure 4 montre l'écart vertical entre le bord extérieur bt de la porte avant t et la surface d'appui s de la carrosserie pour le support du fenestron avec l'axe Ai d'un trou d'indexage i1 ou i2, cet écart vertical donnant la profondeur P entre surface extérieure t de partie avant de porte avant et surface d'appui s pour le support du fenestron servant à calculer la valeur d'affleurement après correction par soustraction de la cote théorique d'épaisseur du fenestron.

La figure 5 est une représentation schématique de la deuxième image obtenue par le procédé conformément à la présente invention permettant la mesure de distance D entre le bord extérieur bt de la porte avant et le trou d'indexage i du fenestron, celui-ci étant absent lors de la mesure. Précisément, D est la distance entre bord bt de partie avant de porte avant t et centre oi de gravité d'un trou d'indexage i du fenestron, ce trou i étant un des trous il ou i2, visibles à la figure 2.

Les algorithmes de la présente invention comportent ainsi deux grandes étapes : un calcul de la valeur brute respective de distance D et de profondeur P entre les pièces et un calcul de correction afin de déterminer la valeur respective de jeu et d'affleurement entre les deux pièces en vis-à-vis.

La présente invention n'est bien entendu pas limitée au mode de réalisation tel que décrit plus haut.

Le procédé et le dispositif selon l'invention trouvent des applications pour la mesure de jeu et d'affleurement entre deux pièces fixées à un ensemble, une pièce étant positionnée sur cet ensemble par au moins un point d'indexage, repérable sur cet ensemble, cette pièce n'étant pas sur l'ensemble lors de la prise de mesure. Par point d'indexage, il est entendu tout signe de repérage ou tout point d'ancrage repérable sur l'ensemble pour le positionnement de la pièce. Ce point d'indexage peut être sous une forme quelconque, par exemple une marque ou un changement de forme ponctuel de l'ensemble, et n'est pas limité à un trou d'indexage comme dans le cas du fenestron.

La présente invention apporte, par rapport aux solutions de l'état de la technique, la possibilité de ne plus utiliser une pièce de remplacement quand une des pièces n'est pas encore montée ce qui permet de ne pas procéder à des opérations de pose, des opérations de dépose ainsi que des opérations de fabrication et de recyclage de ces pièces de remplacement ce qui représente une grande économie de coût.

De plus, la présente invention présente une amélioration de la qualité et de la fiabilité de la mesure. Il n'y a pas de risque de fausse mesure liée à des pièces de remplacement déficientes, mal positionnées ou manquantes.

## Revendications

1. Procédé de mesure de jeu et d'affleurement entre les bords (bt) destinés à être en vis-à-vis d'une première et d'une seconde pièce fixées à un ensemble (V), la seconde pièce étant à positionner sur cet ensemble (V) par rapport à au moins un point d'indexage (i1 ou i2), fixe et repérable sur cet ensemble (V), cette seconde pièce étant absente de l'ensemble (V) lors de la prise de mesure, **caractérisé par** les étapes suivantes :
- positionnement d'au moins un capteur (1) dans une position lui permettant d'avoir une zone de mesure comprenant le bord (bt) de la première pièce et le point d'indexage (i1 ou i2) sur l'ensemble (V) support pour la seconde pièce manquante,
- émission d'une raie LASER pour la formation d'une première image de la zone de mesure, la raie LASER formant un plan lumineux projeté sur la première pièce et l'ensemble (V) de manière à créer au moins une ligne s'étendant transversalement aux bords (bt) destinés à être en vis à vis des deux pièces
- acquisition par ce capteur d'une première image,
- émission d'un éclairage additionnel pour la formation d'une seconde image de cette zone de mesure dans laquelle le point d'indexage (i1 ou i2) sur l'ensemble (V) apparaîtra en ombre chinoise,
- acquisition par ce capteur (1) d'une seconde image,
- traitement des données des images acquises et détermination par un algorithme de la mesure de jeu et d'affleurement entre les première et seconde pièces. Ces deux étapes s'effectuant par :
- détermination de la position du bord (bt) de la première pièce ainsi que du point d'indexage (i1 ou i2) à partir des images acquises donnant ainsi respectivement une mesure de profondeur (P) pour la première image et une mesure de distance (D) pour la seconde image,
- correction par cet algorithme de la mesure de profondeur (P) par soustraction de la valeur de la cote théorique d'épaisseur de la seconde pièce afin d'obtenir l'affleurement, et
- correction par cet algorithme de la mesure de distance (D) par soustraction de la valeur de la cote théorique entre le point d'indexage (il ou i2) et le bord (bt) de la seconde pièce pour obtenir le jeu.

2. Procédé selon la revendication 1, **caractérisé en ce que** la seconde image est obtenue par projection d'un faisceau de lumière diffus.

3. Procédé selon l'une quelconque des revendications 1 et 2, dans le cas où la seconde pièce présente plusieurs points d'indexage (i1 ou i2) sur l'ensemble (V) support, **caractérisé par** des étapes similaires de mesure de distance (D) et de profondeur (P) pour chaque point d'indexage (i1 ou i2) afin d'obtenir une mesure de jeu ou d'affleurement, un capteur (1) spécifique étant associé à chaque point d'indexage (i1 ou i2).

4. Procédé selon l'une quelconque des revendications 1 à 3, **caractérisé en ce qu'**une étape d'inter comparaison de la mesure respective de jeu et d'affleurement obtenue avec celle d'un autre procédé de mesure étalonné est effectuée par offset calculé pour la possible correction de cette mesure et un éventuel réétalonnage de l'algorithme utilisé.

5. Procédé selon l'une quelconque des revendications précédentes, **caractérisé en ce que** les mesures ont lieu lors d'un défilement de l'ensemble (V) support devant le ou les capteurs (1).

6. Dispositif de mesure de jeu et d'affleurement entre les bords destinés à être en vis-à-vis d'une première et d'une seconde pièce fixées à un ensemble (V), la seconde pièce étant à positionner sur cet ensemble (V) par rapport à au moins un point d'indexage (i1 ou i2), fixe et repérable sur cet ensemble (V), cette seconde pièce n'étant pas sur l'ensemble (V) lors de la prise de mesure, **caractérisé en ce qu'**il comprend au moins un capteur (1) 3D présentant une zone de mesure respective compatible entre le bord (bt) devant être en vis-à-vis de la première pièce et le point d'indexage (i1 ou i2) de la seconde sur la partie support de l'ensemble (V), une première (1) et une seconde source (2) de lumière avec des moyens optiques associés pour émettre respectivement une raie LASER pour l'obtention de la première image et un éclairage diffus pour l'obtention de la seconde image avec le point d'indexage (i1 ou i2) apparaissant en ombre chinoise sur cette seconde image, ce dispositif comprenant, en outre, une unité de traitement des images acquises adaptée à mettre en oeuvre le procédé des revendications 1 à 5, pour le calcul de la mesure respective de profondeur (P) et de distance (D) suivi par le calcul de la mesure respective de jeu et d'affleurement après correction selon les données enregistrées dans une unité de stockage de données relatives aux deux pièces.

7. Dispositif selon la revendication précédente, **caractérisé en ce que** la première source (1) est une diode LASER et la seconde source (2) un panneau LED.

8. Dispositif selon la revendication 6 ou 7, **caractérisé en ce qu'**au moins un capteur (1) 3D est intégré avec la première source (1) de lumière formant ainsi un capteur (1) vision, ce capteur (1) étant de préférence sous forme d'une caméra.

9. Dispositif selon l'une quelconque des revendications 6 à 8, **caractérisé en ce que** le ou les capteurs (1) 3D sont disposés latéralement à l'ensemble (V) et n'interfèrent pas avec celui-ci quand cet ensemble (V) est en défilement lors de la prise de la mesure respective.

10. Ensemble (V) contenant au moins des première et seconde pièces, **caractérisé en ce que** les mesures de jeu et d'affleurement de ces deux pièces l'une par rapport à l'autre sont effectuées soit par un procédé selon les revendications 1 à 5, soit par un dispositif selon les revendications 6 à 9.

11. Ensemble (V) selon la revendication 10, **caractérisé en ce qu'**il comprend d'autres éléments destinés à être en vis-à-vis dont la mesure de jeu et d'affleurement est effectuée en l'absence d'un de ces éléments de manière similaire et simultanément à celles des première et seconde pièces.

12. Ensemble (V) selon la revendication 10 ou 11, **caractérisé en ce qu'**il est un véhicule automobile.

13. Véhicule automobile selon la revendication précédente, **caractérisé en ce que** la première pièce est une porte du véhicule et la seconde pièce un fenestron associé à cette porte et posé sur le véhicule en aval de la prise de la mesure respective de jeu et d'affleurement sur la chaîne de montage.

## Claims

1. A method for measuring clearance and flush-fitting between the edges (bt) intended to be facing a first and a second component which are fixed to an assembly (V), the second component being to be positioned on this assembly (V) with respect to at least one indexing point (i1 or i2), fixed and able to be marked on this assembly (V), this second component being absent from the assembly (V) during the measurement, **characterized by** the following steps:
- positioning of at least one sensor (1) in a position that it allows it to have a measurement zone comprising the edge (bt) of the first component and the indexing point (i1 or i2) on the support assembly (V) for the missing second component,
- emission of a LASER beam for the formation of a first image of the measurement zone, the LASER beam forming a plane of light projected on the first component and the assembly (V) so as to create at least one line extending transversely to the edges (bt) intended to be facing the two components,
- acquisition by this sensor of a first image,
- emission of an additional lighting for the formation of a second image of this measurement zone in which the indexing point (i1 or i2) on the assembly (V) will be silhouetted,
- acquisition by this sensor (1) of a second image,
- processing of the data of the acquired images and determining by an algorithm the measurement of clearance and flush-fitting between the first and second components. These two steps being carried out by:
- determining the position of the edge (bt) of the first component and also of the indexing point (i1 or i2) from the acquired images thus giving respectively a depth measurement (P) for the first image and a distance measurement (D) for the second image,
- correction by this algorithm of the depth measurement (P) by subtraction of the value of the theoretical thickness dimension of the second component so as to obtain the flush-fitting, and
- correction by this algorithm of the distance measurement (D) by subtraction of the value of the theoretical dimension between the indexing point (i1 or i2) and the edge (bt) of the second component to obtain the clearance.

2. The method according to Claim 1, **characterized in that** the second image is obtained by projection of a diffuse light beam.

3. The method according to any one of Claims 1 and 2, in the case where the second component has several indexing points (i1 or i2) on the support assembly (V), **characterized by** similar measurement steps of distance (D) and of depth (P) for each indexing point (i1 or i2) so as to obtain a measurement of clearance or flush-fitting, a specific sensor (1) being associated with each indexing point (i1 or i2).

4. The method according to any one of Claims 1 to 3, **characterized in that** an intercomparison step of the respective measurement of play and of clearance obtained with that of another calibrated measurement method is carried out by calculated offset for the possible correction of this measurement and a possible recalibration of the algorithm which is used.

5. The method according to any one of the preceding claims, **characterized in that** the measurements take place during a passage of the support assembly (V) in front of the sensor or sensors (1).

6. A device for measuring clearance and flush-fitting between the edges intended to be facing a first and a second component which are fixed to an assembly (V), the second component being to be positioned on this assembly (V) with respect to at least one indexing point (i1 or i2), fixed and able to be marked on this assembly (V), this second component not being on the assembly (V) during the measurement, **characterized in that** it comprises at least one 3D sensor (1) having a respective compatible measurement zone between the edge (bt) which should be facing the first component and the indexing point (i1 or i2) of the second on the support part of the assembly (V), a first (1) and a second (2) light source with associated optical means for emitting respectively a LASER beam for obtaining the first image and a diffuse lighting for obtaining the second image with the indexing point (i1 or i2) being silhouetted on this second image, this device comprising, in addition, a processing unit of the acquired images, suited to implement the method of Claims 1 to 5, for the calculation of the respective measurement of depth (P) and of distance (D), followed by the calculation of the respective measurement of clearance and of flush-fitting after correction according to the data entered in a storage unit of data relating to the two components.

7. The device according to the preceding claim, **characterized in that** the first source (1) is a LASER diode and the second source (2) is an LED panel.

8. The device according to Claim 6 or 7, **characterized in that** at least one 3D sensor (1) is integrated with the first light source (1) thus forming a vision sensor (1), this sensor (1) preferably being in the form of a camera.

9. The device according to any one of Claims 6 to 8, **characterized in that** the 3D sensor or sensors (1) are arranged laterally to the assembly (V) and do not interfere therewith when this assembly (V) is moving past during the respective measurement.

10. An assembly (V) containing at least first and second components, **characterized in that** the measurements of clearance and of flush-fitting of these two components with respect to one another are carried out either by a method according Claims 1 to 5 or by a device according to Claims 6 to 9.

11. The assembly (V) according to Claim 10, **characterized in that** it comprises other elements intended to be facing, the measurement of the clearance and flush-fitting of which is carried out in the absence of one of these elements in a similar manner and simultaneously to those of the first and second components.

12. The assembly (V) according to Claim 10 or 11, **characterized in that** it is a motor vehicle.

13. A motor vehicle according to the preceding claim, **characterized in that** the first component is a door of the vehicle and the second component is a quarterlight associated with this door and placed on the vehicle downstream of the respective measuring of clearance and of flush-fitting on the assembly line.

## Patentansprüche

1. Verfahren zur Messung von Spiel und bündigem Abschluss zwischen den Rändern (bt), die dazu bestimmt sind, einer ersten und einer zweiten Komponente, die an einer Einheit (V) befestigt sind, gegenüberzuliegen, wobei die zweite Komponente auf dieser Einheit (V) in Bezug zu wenigstens einem Positionierungspunkt (i1 oder i2), der stationär und auf dieser Einheit (V) erkennbar ist, zu positionieren ist, wobei die zweite Komponente von der Einheit (V) bei der Messung abwesend ist, **gekennzeichnet durch** die folgenden Schritte:
- Positionieren wenigstens eines Sensors (1) in einer Position, die es ihm erlaubt, einen Messbereich zu haben, der den Rand (bt) der ersten Komponente und den Positionierungspunkt (i1 oder i2) auf der Trageinheit (V) für die zweite fehlende Komponente umfasst,
- Senden eines LASERstrahls zum Bilden eines ersten Bilds des Messbereichs, wobei der LASERstrahl eine Leuchtebene bildet, die auf die erste Komponente und die Einheit (V) derart projiziert wird, dass wenigstens eine Linie geschaffen wird, die sich quer zu den Rändern (bt), die dazu bestimmt sind, den beiden Komponenten gegenüberzuliegen, erstreckt,
- Erfassen eines ersten Bilds **durch** diesen Sensor,
- Senden einer zusätzlichen Beleuchtung zum Bilden eines zweiten Bilds dieses Messbereichs, in dem der Positionierungspunkt (i1 oder i2) auf der Einheit (V) als Schattenspiel erscheint,
- Erfassen **durch** diesen Sensor (1) eines zweiten Bilds,
- Verarbeitung der Daten der erfassten Bilder und Bestimmen der Messung von Spiel und bündigem Abschluss zwischen der ersten und der zweiten Komponente **durch** einen Algorithmus. Diese zwei Schritte erfolgen **durch**:
- Bestimmen der Position des Rands (bt) der ersten Komponente sowie des Positionierungspunkts (i1 oder i2) ausgehend von den erfassten Bildern, die daher jeweils eine Tiefenmessung (P) für das erste Bild und eine Entfernungsmessung (D) für das zweite Bild geben,
- Korrektur **durch** diesen Algorithmus der Tiefenmessung (P) **durch** Abziehen des Werts des theoretischen Stärkenmaßes der zweiten Komponente, um den bündigen Abschluss zu erzielen, und
- Korrektur **durch** diesen Algorithmus der Entfernungsmessung (D) **durch** Abziehen des Werts des theoretischen Maßes zwischen dem Positionierungspunkt (i1 oder i2) und dem Rand (bt) der zweiten Komponente, um das Spiel zu erzielen.

2. Verfahren nach Anspruch 1, **dadurch gekennzeichnet, dass** das zweite Bild durch Projizieren eines Strahls gestreuten Lichts erzielt wird.

3. Verfahren nach einem der Ansprüche 1 und 2, in dem Fall, in dem die zweite Komponente mehrere Positionierungspunkte (i1 oder i2) auf der Trageinheit (V) aufweist, **gekennzeichnet durch** ähnliche Messschritte der Entfernung (D) und Tiefe (P) für jeden Positionierungspunkt (i1 oder i2), um eine Messung von Spiel oder bündigem Abschluss zu erzielen, wobei ein spezifischer Sensor (1) mit jedem Positionierungspunkt (i1 oder i2) verbunden ist.

4. Verfahren nach einem der Ansprüche 1 bis 3, **dadurch gekennzeichnet, dass** ein Schritt des gegenseitigen Vergleichs der jeweiligen erzielten Messung von Spiel und bündigem Abschluss mit der eines anderen geeichten Messverfahrens durch Unterschied, der für die mögliche Korrektur dieser Messung und eine eventuelle neue Eichung des verwendeten Algorithmus berechnet wird, erfolgt.

5. Verfahren nach einem der vorhergehenden Ansprüche, **dadurch gekennzeichnet, dass** die Messungen bei einem Ablaufen der Trageinheit (V) vor dem oder den Sensoren (1) stattfinden.

6. Messvorrichtung für Spiel und bündigen Abschluss zwischen den Rändern, die dazu bestimmt sind, einer ersten und einer zweiten Komponente, die an einer Einheit (V) befestigt sind, gegenüberzuliegen, wobei die zweite Komponente auf dieser Einheit (V) in Bezug zu wenigstens einem Positionierungspunkt (i1 oder i2), der stationär und auf dieser Einheit (V) erkennbar ist, zu positionieren ist, wobei diese zweite Komponente bei der Messung nicht auf der Einheit (V) ist, **dadurch gekennzeichnet, dass** sie wenigstens einen 3D-Sensor (1) aufweist, der einen jeweiligen kompatiblen Messbereich aufweist, der zwischen dem Rand (bt), der der ersten Komponente und dem Positionierungspunkt (i1 oder i2) der zweiten Komponente auf dem Tragteil der Einheit (V) gegenüber liegen soll, eine erste (1) und eine zweite (2) Lichtquelle mit dazugehörenden optischen Mitteln, um jeweils einen LASERstrahl zum Erzielen des ersten Bilds und eine gestreute Beleuchtung zum Erzielen des zweiten Bilds zu senden, wobei der Positionierungspunkt (i1 oder i2) im Schattenbild auf diesem zweiten Bild erscheint, wobei diese Vorrichtung ferner eine Verarbeitungseinheit der erfassten Bilder aufweist, die angepasst ist, um das Verfahren der Ansprüche 1 bis 5 für die Berechnung der jeweiligen Messung der Tiefe (P) und der Entfernung (D), gefolgt von der Berechnung der jeweiligen Messung von Spiel und bündigem Abschluss nach Korrektur gemäß den in einer Datenspeichereinheit in Zusammenhang mit den zwei Komponenten aufgezeichneten Daten, umzusetzen.

7. Vorrichtung nach dem vorhergehenden Anspruch, **dadurch gekennzeichnet, dass** die erste Quelle (1) eine LASERdiode und die zweite Quelle (2) eine LED-Platte ist.

8. Vorrichtung nach Anspruch 6 oder 7, **dadurch gekennzeichnet, dass** wenigstens ein 3D-Sensor (1) mit der ersten Lichtquelle (1) integriert ist, die daher einen Visionssensor (1) bildet, wobei dieser Sensor (1) vorzugsweise die Form einer Kamera hat.

9. Vorrichtung nach einem der Ansprüche 6 bis 8, **dadurch gekennzeichnet, dass** der oder die 3D-Sensor(en)(1) seitlich an der Einheit (V) angeordnet ist/sind und mit diesem nicht interferiert/interferieren, wenn diese Einheit (V) beim jeweiligen Messen in Ablauf ist.

10. Einheit (V), die wenigstens erste und zweite Komponenten aufweist, **dadurch gekennzeichnet, dass** die Messungen von Spiel und bündigem Abschluss dieser zwei Komponenten zueinander entweder durch ein Verfahren gemäß den Ansprüchen 1 bis 5 oder durch eine Vorrichtung gemäß den Ansprüchen 6 bis 9 ausgeführt werden.

11. Einheit (V) nach Anspruch 10, **dadurch gekennzeichnet, dass** sie andere Elemente aufweist, die dazu bestimmt sind, einander gegenüberzuliegen, deren Spielmessung und Messung des bündigen Abschlusses bei Fehlen eines dieser Elemente auf ähnliche Art und gleichzeitig mit denen der ersten und der zweiten Komponente ausgeführt wird.

12. Einheit (V) nach Anspruch 10 oder 11, **dadurch gekennzeichnet, dass** sie ein Kraftfahrzeug ist.

13. Kraftfahrzeug nach dem vorhergehenden Anspruch, **dadurch gekennzeichnet, dass** die erste Komponente eine Tür des Fahrzeugs und die zweite Komponente ein Fenster ist, das zu dieser Tür gehört und auf dem Fahrzeug stromabwärts der Erfassung der jeweiligen Messung von Spiel und bündigem Abschluss auf der Montagelinie angeordnet ist.
